# EUROPÄISCHE PATENTANMELDUNG

(11) **EP 2 214 104 A1**
(43) Veröffentlichungstag der Anmeldung: **04.08.2010**
(21) Anmeldenummer: 10004317.3
(22) Anmeldetag: 22.12.1997
(51) Int. Cl.: G06F 15/78

(54) **Umkonfigurierungs-Verfahren für programmierbare Bausteine während der Laufzeit**

(30) Priorität: 20.12.1996 DE 19654593
(62) Teilanmeldung aus: 01113330.3
(71) Anmelder: Krass, Maren, 8044 Zürich (CH); Richter, Thomas, 04703 Bockelwitz (DE)
(72) Erfinder: Vorbach, Martin, 67360 Lingenfeld (DE); Münch, Robert, 76135 Karlsruhe (DE)
(74) Vertreter: Pietruk, Claus Peter

(57) **Zusammenfassung**

Die Erfindung betrifft einen Datenverarbeitungschip mit einer Vielzahl von zur Laufzeit konfigurierbaren Zellen, von welchen zumindest einige arithmetisch-logische Einheiten aufweisen. Weiter sind vorgesehen ein als FIFO-Speicher betreibbarer Speicher zum Ablegen von Konfigurationen für die konfigurierbaren Zellen, eine Einheit zum Empfangen von Konfigurationen und zum Ablegen der Konfigurationen in den FIFO-Speicher und eine Einheit zum Auswählen von Konfigurationen in dem FIFO-Speicher, basierend auf Ereignissen, wobei die ausgewählte Konfiguration an die jeweilige(n) konfigurierbaren(n) Zelle(n) übertragen und nachfolgend ausgeführt wird.

## Beschreibung

### Hintergrund der Erfindung

### Stand der Technik

Programmierbare Bausteine mit zwei oder mehrdimensionaler Zellanordnung (insbesondere FPGAs, DPGAs und DFPs oder ähnliche) werden heutzutage auf zwei verschiedene Arten programmiert.
1. Einmalig, das heißt die Konfiguration kann nach der Programmierung nicht mehr geändert werden. Alle konfigurierten Elemente des Bausteins führen also die gleiche Funktion aus, über den gesamten Zeitraum hindurch, in dem die Anwendung abläuft.
2. Im Betrieb, das heißt die Konfiguration kann nach Einbau des Bausteins, durch das Laden einer Konfigurationsdatei zum Startbeginn der Anwendung, geändert werden. Die meisten Bausteine (insbesondere die FPGA-Bausteine), lassen sich während des Betriebes nicht wieder umkonfigurieren. Bei umkonfigurierbaren Bausteinen ist eine Weiterverarbeitung von Daten während des Umkonfigurierens meistens nicht möglich und die benötigte Umkonfigurierungszeit erheblich zu groß.

Neben den FPGAs gibt es noch die sogenannten DPGAs. Diese Bausteine speichern eine kleine Anzahl an verschiedenen Konfigurationen, welche durch ein spezielles Datenpaket ausgewählt werden. Eine Umkonfigurierung dieser Speicher während der Laufzeit ist nicht möglich.

### Probleme

Große Probleme bereitet die Umkonfigurierung von gesamten programmierbaren Bausteinen oder Teilen davon während der Laufzeit und dabei besonders die Synchronisation. Alle bisherigen Lösungen halten die Verarbeitung des kompletten Bausteins, während der Umkonfigurierung, an. Ein weiteres Problem ist die Selektion der neu zu ladenden Teilkonfiguration und das Integrieren dieser Teilkonfiguration in die bereits bestehende Konfiguration.

Die Aufgabe der vorliegenden Erfindung zielt darauf, Neues für die gewerbliche Anwendung bereitzustellen. Die Lösung dieser Aufgabe wird unabhängig beansprucht. Bevorzugte Ausführungen finden sich in den Unteransprüchen.

Durch das Beschriebene ist es möglich, einen zur Laufzeit umkonfigurierbaren Baustein effizient und ohne Beeinflussung der nicht an der Umkonfigurierung beteiligten Bereiche umzuladen. Weiterhin ermöglicht das Verfahren das Selektieren von Konfigurationen in Abhängigkeit von der aktuellen Konfiguration. Das Problem der Synchronisation der an der Umkonfiguration beteiligten und nicht beteiligten Bereiche wird ebenfalls gelöst.

### Übersicht

Beschrieben wird ein Verfahren zum Umkonfigurieren von programmierbaren Bausteinen, bestehend aus einer zwei- oder mehrdimensionalen Zellanordnung. Das Verfahren ermöglicht die Umkonfigurierung des Bausteins oder der Bausteine, ohne die Arbeitsfähigkeit der nicht an der Umkonfigurierung beteiligten Zellen, einzuschränken. Das Verfahren ermöglicht das Laden von kompletten Konfigurationen oder von Teilkonfigurationen in den oder die programmierbaren Bausteine. Die Einzelheiten und besondere Ausgestaltungen sowie Merkmale des erfindungsgemäßen Verfahrens zum Umkonfigurieren von programmierbaren Bausteinen sind Gegenstand der Patentansprüche.

Die Detailbeschreibung setzt einen programmierbaren Baustein voraus, wobei folgende Eigenschaften beziehungsweise Mittel vorhanden sein können:

### 1. Ladelogik

Die Ladelogik ist der Teil des Bausteins, welcher das Laden und Eintragen von Konfigurationsworten in die zu konfigurierenden Elemente des Bausteins (Zellen) durchführt.

### 2. Zellen

Der Baustein besitzt eine Vielzahl an Zellen, welche einzeln durch die Ladelogik adressiert werden können.

### 3. Rückmeldung Ladelogik

Jede Zelle oder Gruppe von Zellen muss der Ladelogik mitteilen können, ob sie umkonfiguriert werden kann.

### 4. Rückmeldung Zellen

Jede Zelle muss die Möglichkeit haben, ein STOP-Signal an die Zellen zu senden, von denen sie ihre zu verarbeitenden Daten erhält.

### 5. START/STOP-Kennung

Jede Zelle muss eine Möglichkeit besitzen, ein START/STOP-Kennung einzustellen.
a) Die START-Kennung zeichnet eine Zelle als den Beginn einer längeren Verarbeitungskette (Makro) aus.
b) Die STOP-Kennung markiert das Ende des Makros, also den Punkt, an dem die Verarbeitung des Makros ein Ergebnis geliefert hat.

### Aufbau eines Konfigurationswortes

Die Ladelogik ist eine Zustandsmaschine, welche Konfigurationsworte verarbeiten kann. Neben Konfigurationsworten für Zellen existieren Einträge, welche durch die Ladelogik als Befehle erkannt werden können. Es ist also möglich zu unterscheiden, ob der Inhalt des Konfigurationswortes an eine Zelle zu übertragen ist oder einen Befehl für die Zustandsmaschine darstellt.

Ein Konfigurationswort, welches an Zellen des Bausteins übertragen wird, muss dabei mindestens folgende Daten enthalten:

### 1. Adresse der Zelle

Zum Beispiel als lineare Nummer oder als X,Y-Koordinaten.

### 2. Konfigurationswort, welches in die Zelle übertragen wird. Kennungen und Befehle für die Ladelogik

Für eine korrekte Arbeitsweise der Ladelogik muss diese nur zwei Befehlsworte erkennen können. Dies sind:

### 1. END

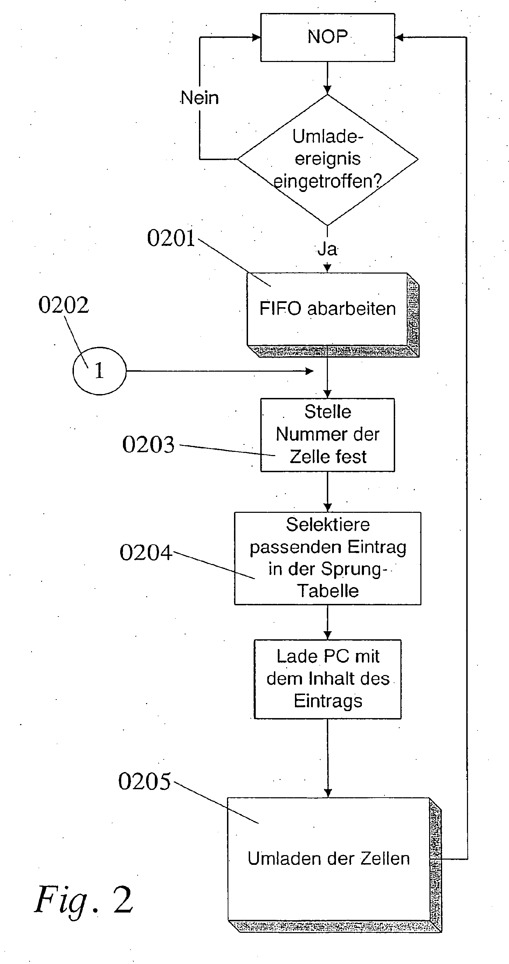

Dies ist ein Befehl, welcher die Ladelogik in einen Zustand versetzt, in dem sie auf das Eintreffen von Ereignissen von Zellen wartet. (Figur 2)

### 2. DISPATCH (Eintragsnummer, Adresse)

Die Ladelogik trägt in die Adresse, welche durch den Parameter Eintragsnummer angegeben wird, der Sprung-Tabelle den Wert des Parameters Adresse ein.

Weiterhin kann die Ladelogik einen Eintrag als Leer-Eintrag erkennen. Dies wird dadurch erreicht, dass ein bestimmtes Bit-Muster als Leer-Kennung definiert ist, welches durch die Ladelogik erkannt werden kann.

### Die Sprung-Tabelle

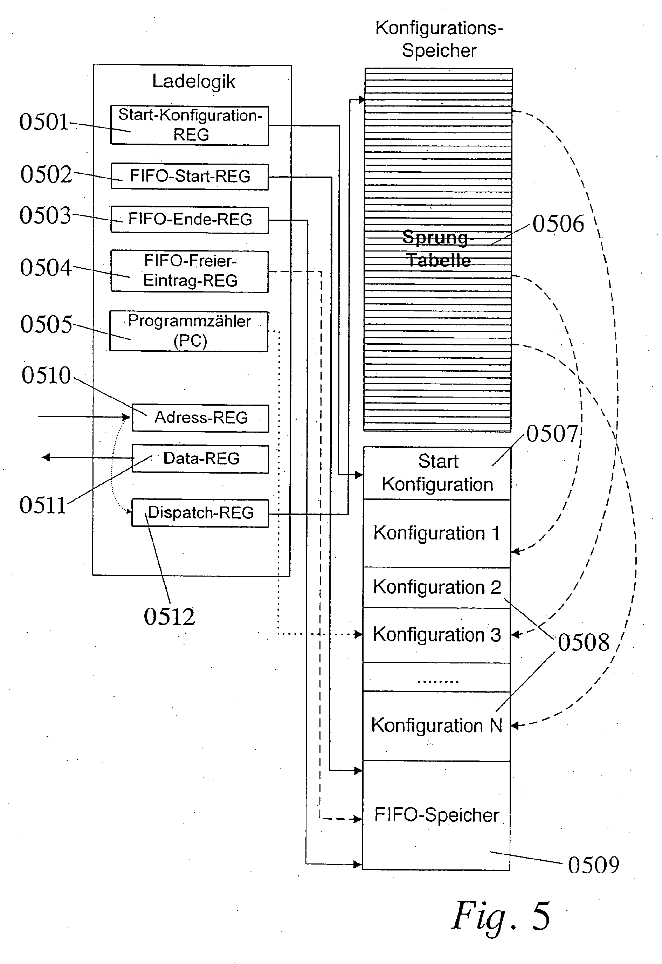

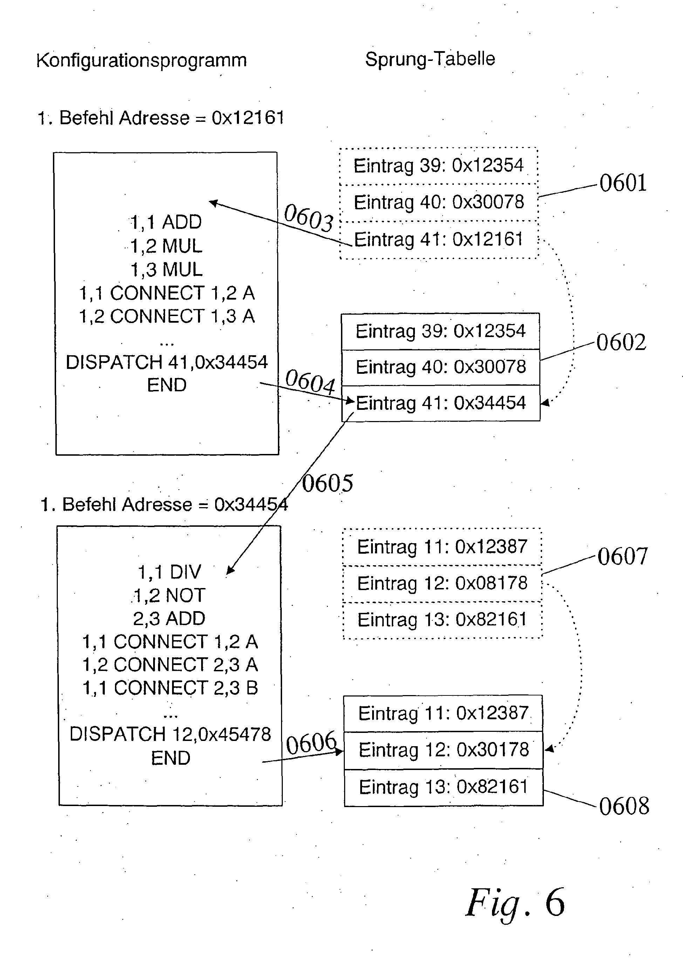

Im Konfigurationsspeicher existiert eine Sprung-Tabelle (0506). Die Größe der Sprung-Tabelle ist dabei so gewählt, dass für jede Zelle, welche von der Ladelogik adressiert werden kann, genau ein einziger Eintrag vorhanden ist. Zu jeder Zelladresse existiert genau ein einziger Eintrag in der Sprung-Tabelle, welcher durch die Ladelogik berechnet werden kann (Figur 5 und 6)

In einem Eintrag der Sprung-Tabelle steht eine Speicheradresse (0601). Diese Speicheradresse gibt an, von wo weitere Konfigurationsdaten (0508) aus dem Konfigurationsspeicher zu lesen sind, falls von dieser Zelle eine Rückmeldung an die Ladelogik erfolgt.

### Start des Systems

Durch einen Reset, also das Rücksetzen des Systems, beginnt die Ladelogik mit dem Empfangen oder Laden von Konfigurationsdaten von einem Speicher in den Konfigurationsspeicher (0101). Alle Zellen des Bausteines sind in dem Zustand, in dem sie konfiguriert werden können. Danach springt die Ladelogik durch Laden des Programmzählers (PC)(0505) an eine Speicherstelle, welche die Adresse einer Startkonfiguration (0507) enthält (0102). Diese Startkonfiguration wird solange abgearbeitet, bis die Ladelogik eine END-Kennung erkennt (0103). Diese Startkonfiguration programmiert den Baustein derart, dass eine Verarbeitung von Daten beginnen kann. Nach dem Eintragen der Startkonfiguration wechselt die Ladelogik auf Grund der END-Kennung in einen Zustand, in dem sie auf Ereignisse von den Zellen wartet (0104).

### Eintreffen eines Ereignisses einer Zelle

Nach der Verarbeitung von Daten kann eine Zelle eine Rückmeldung an die Ladelogik senden. Diese Rückmeldung (Ereignis) zeigt an, dass die Zelle und damit das Makro, in dem die Zelle enthalten ist, seine Arbeit beendet hat und das Umladen erfolgen kann.

Bevor allerdings mit dem Laden einer neuen Konfiguration begonnen wird, wird der nachfolgend beschriebene FIFO-Speicher (First-In-First-Out-Speicher) abgearbeitet (0201), dessen Organisation garantiert, dass Zellen, die im ersten Versuch nicht umgeladen werden konnten, im zweiten Versuch als erste wieder an der Reihe sind. Dadurch wird verhindert, dass Zellen, welche zwischenzeitlich signalisiert haben, dass sie umkonfiguriert werden können, ganz nach hinten in der Bearbeitung rutschen. In diesem Fall könnte ein Deadlock-Situation auftreten, in der das eine Makro erst umkonfiguriert werden kann, wenn ein anderes Makro umkonfiguriert wurde.

Durch die Rückmeldung an die Ladelogik erhält die Ladelogik auch die Adresse oder Nummer der Zelle, welche die Rückmeldung ausgelöst hat. Mit Hilfe dieser Nummer wird der passende Eintrag in der Sprung-Tabelle selektiert (0203, 0204). Die Adresse, welche in diesem Eintrag enthalten ist, gibt den Beginn der zu ladenden Konfiguration innerhalb des Konfigurationsspeichers an (0205).

### Spezieller Speicherbereich (FIFO-Speicher)

Das Verfahren muss berücksichtigen, dass es sein kann, dass einige Zellen ihre Arbeit noch nicht beendet haben, diese Zellen jedoch schon umgeladen werden sollen. Alle Konfigurationsdaten der Zellen, bei denen eine solche Bedingung zutrifft, werden in einen speziellen Speicherbereich (FIFO-Speicher) kopiert (0506).

Jedes Mal, bevor eine neue Konfiguration geladen werden soll, wird der FIFO-Speicher durchlaufen. Da eine neue Konfiguration geladen werden soll, haben einige Zellen ihre Arbeit beendet und sind in den Zustand *'umkonfigurierbar'* übergegangen. Unter diesen Zellen können sich auch solche befinden, bei denen eine Umkonfigurierung durch die Ladelogik in einem früheren Versuch gescheitert ist, da diese Zellen ihre Arbeit noch nicht beendet hatten, diese Umkonfigurierung jetzt aber erfolgreich durchgeführt werden kann.

Die Ladelogik lädt den PC mit dem Inhalt des Registers, welches auf den Beginn des FIFO-Speichers zeigt (FIFO-Start-REG) (0502) und liest die Daten aus dem FIFO-Speicher. Ein Vergleich stellt fest, ob das Ende des FIFO-Speichers erreicht wurde (0301). Ist dies der Fall, so wird an die Stelle in der Zustandsmaschine zurückgesprungen, an der die Umkonfigurierung fortläuft (0202).

Die Abarbeitung des FIFO-Speichers geschieht ähnlich dem einer Konfiguration innerhalb des Konfigurationsspeichers. Es kann der Fall eintreten, dass eine Zelle auch bei einem weiteren Versuch immer noch nicht umkonfiguriert werden kann. In diesem Fall werden die Konfigurationsdaten, falls eine leere Speicherstelle weiter vorne im FIFO-Speicher existiert, in diese Speicherstelle kopiert (0302).

Dieser Kopiervorgang wird dadurch erreicht, dass die Ladelogik die Startadresse des FIFO-Speichers im FIFO-Start-REG (0502) gespeichert hat und die Endeadresse im FIFO-End-REG (0503). Weiterhin kennt die Ladelogik die Adresse des nächsten freien Eintrags (beginnend vom Anfang des FIFO-Speichers) mittels des FIFO-Free-Entry-REG (0504, 0303). Nachdem das Konfigurationswort in den freien Eintrag kopiert wurde (0304), positioniert die Ladelogik den Zeiger des FIFO-Free-Entry-REG auf den nächsten freien Eintrag (0305), innerhalb des FIFO-Speichers. Die Suche erfolgt dabei in Richtung des Endes des FIFO-Speichers. Danach wird der PC auf den nächsten Eintrag innerhalb des FIFO-Speichers gesetzt (0306).

### Umladen von Zellen

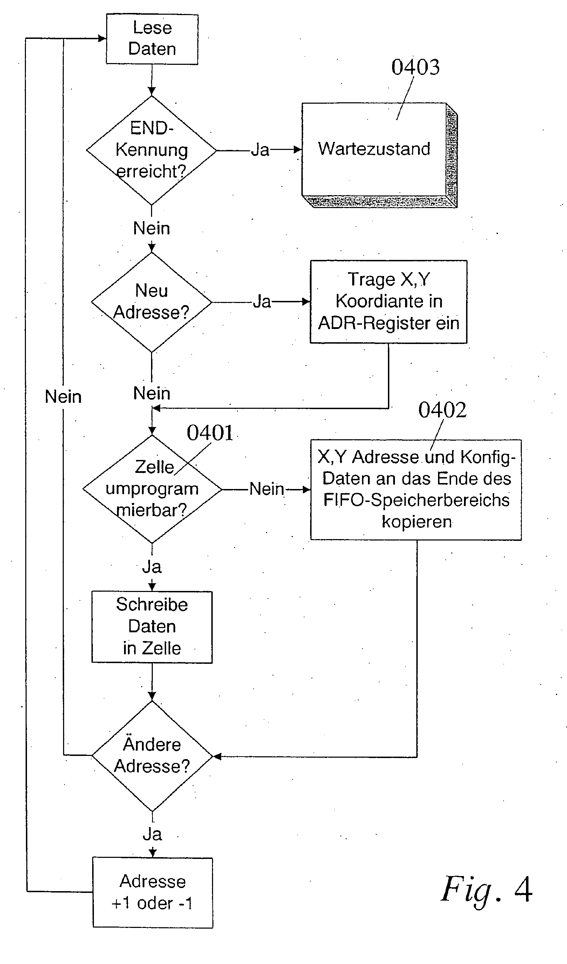

Die Ladelogik liest nun die Konfigurationsdaten aus dem Konfigurationsspeicher. In diesen Daten ist die Adresse der Zelle enthalten, welche umgeladen werden soll (Figur 4). Jede Zelle kann signalisieren, dass sie umgeladen werden kann. Die Ladelogik testet dies (0401). Kann die Zelle umgeladen werden, werden die Konfigurationsdaten von der Ladelogik an die Zelle übertragen.

Ist die Zelle noch nicht bereit, werden die durch die Ladelogik gelesenen Daten in einen Speicherbereich, den FIFO-Speicher, innerhalb des Konfigurationsspeichers geschrieben (0402). Die Adresse, an welche die Daten geschrieben werden, ist in einem Register innerhalb der Ladelogik, abgelegt (FI-FO-End-Reg)(0503).

Dieser Vorgang wird so oft wiederholt, bis die Ladelogik die END-Kennung des Konfigurationsprogramms erkennt und wieder in den Zustand übergeht, in dem die Ladelogik auf Ereignisse der Zellen wartet (0403).

### Aufbau des Konfigurationsprogramms

Nachdem eine Zelle das Signal zum Umladen gegeben hat und das Makro, in dem die Zelle integriert ist, umgeladen wurde, entsteht eine neue Konfiguration. Die Zelle, die vorher das Signal an die Ladelogik geben hat, kann jetzt eine ganz andere Aufgabe haben, insbesondere kann sie nicht mehr die Zelle sein, welche ein Umladesignal an die Ladelogik abschickt; wobei es möglich sein kann, dass in der neuen Konfiguration wieder dieselbe Zelle das Umladesignal an die Ladelogik schickt.

Mittels des DISPATCH-Befehls, innerhalb des Konfigurationsprogramms, kann eine neue Adresse an die Eintragsposition der Zelle in der Sprung-Tabelle geschrieben werden (0604). Diese neue Adresse kann auf eine neue Konfiguration oder Teilkonfiguration zeigen, welche bei einer Rückmeldung von dieser Zelle geladen werden soll.

### Kurzbeschreibung der Diagramme

Fig. 1 ist ein Ablaufplan der Schritte, die nach einem Systemstart durchzuführen sind.
Fig. 2 ist ein Ablaufplan der Schritte, die nach dem Eintreffen einer Umkonfigurierungsanforderung durchzuführen sind.
Fig. 3 ist ein Ablaufplan der Schritte, die bei der FIFO-Speicher-Bearbeitung durchzuführen sind.
Fig. 4 ist ein Ablaufplan der Schritte, die bei der Konfigurierung der Zellen durchzuführen sind.
Fig. 5 zeigt die Ladelogik mit ihren Registern. Weiterhin ist der Konfigurationsspeicher sowie die Unterteilung in Sprung-Tabelle, Start-Konfiguration, weitere Konfigurationen und der FIFO-Speicher zu sehen.
Fig. 6 zeigt zwei Ausschnitte aus einem Konfigurationsprogramm und vier Ausschnitte aus der Sprung-Tabelle und wie diese in zeitlichem Zusammenhang stehen.

### Detailbeschreibung der Diagramme

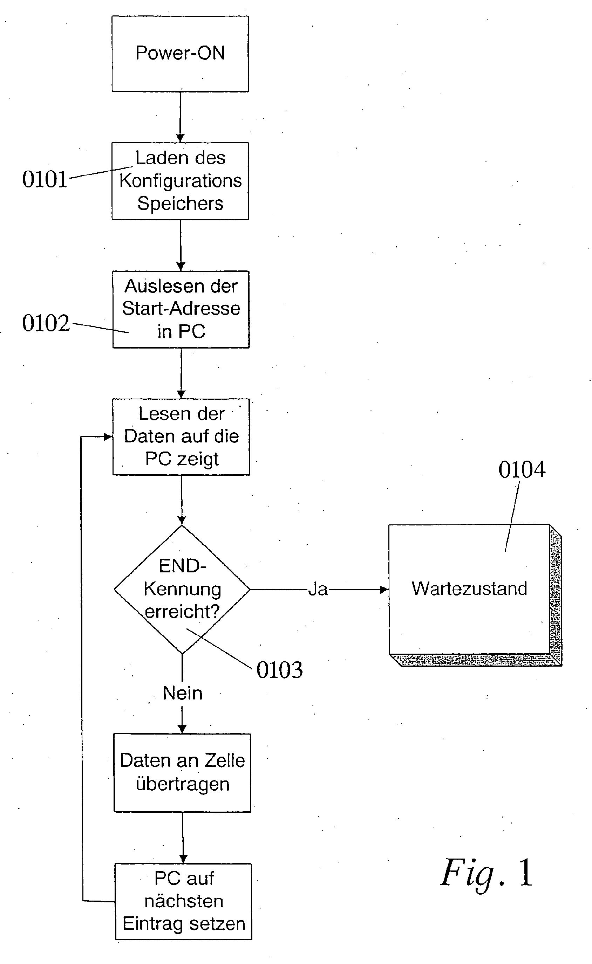

Figur 1 zeigt in einem Ablaufplan, welche Schritte nach einem Systemstart durchzuführen sind. Durch einen Vergleich mit der END-Kennung der Start-Konfiguration wird in den Wartezustand gesprungen (0104).

Figur 2 zeigt in einem Ablaufplan die notwendigen Schritte, welche während des Wartezustandes und, nachdem eine Umkonfigurierung durch eine Zelle signalisiert wurde, durchzuführen sind. Der Ablaufplan besitzt einen Einsprungspunkt (0202), der von anderer Stelle angesprungen wird.

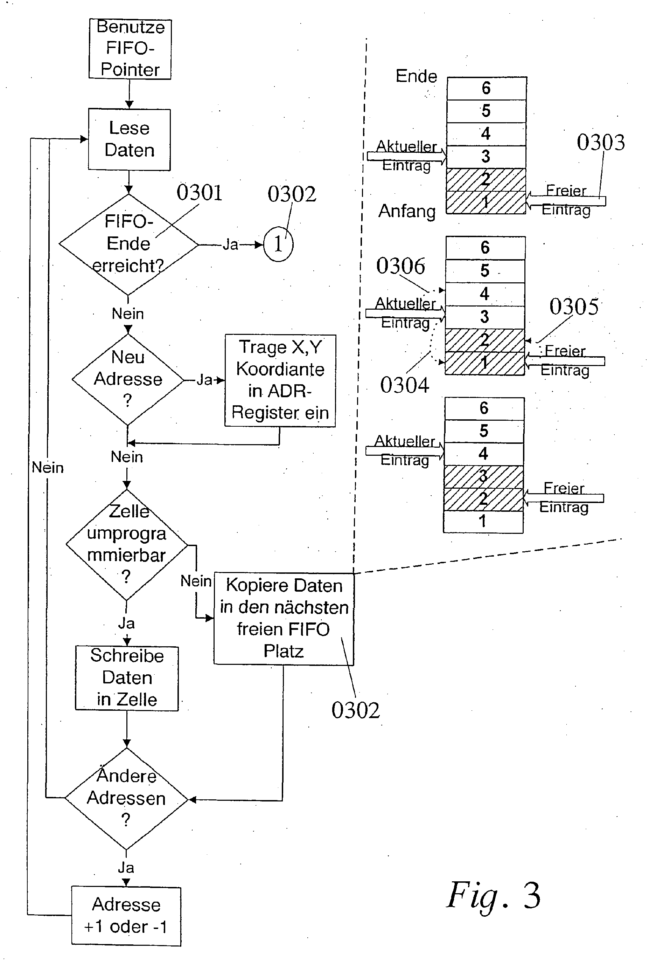

Figur 3 zeigt in einem Ablaufplan, wie die Behandlung des FIFO-Speichers durchzuführen ist. Weiterhin ist dargestellt, wie der Kopiervorgang innerhalb des FIFO-Speichers arbeitet.

Figur 4 zeigt in einem Ablaufplan, welche Schritte bei der Umkonfigurierung der Zellen notwendig sind und wie eine Konfiguration innerhalb des Konfigurierungsprogramms abgearbeitet wird.

Figur 5 stellt die Ladelogik und ihre Register dar. Die Ladelogik besitzt fünf verschiedene Register. Dies sind:

### 1. Das Start-Konfiguration-REG (0501)

In diesem Register steht die Adresse der Startkonfiguration innerhalb des Konfigurationsspeichers. Die Daten sind derart in dem Konfigurationsprogramm enthalten, dass sie von der Ladelogik erkannt und in das Start-Konfiguration-REG übernommen werden können.

### 2. Ein FIFO-Start-REG (0502)

Das FIFO-Start-REG zeigt auf den Beginn des FIFO-Speicherbereichs, innerhalb des Konfigurationsspeichers.

### 3. Ein FIFO-End-REG (0503)

Das FIFO-End-REG kennzeichnet das Ende des FIFO-Speichers. An diese Stelle werden die Konfigurationsworte kopiert, welche durch die Ladelogik nicht verarbeitet werden konnten.

### 4. Ein FIFO-Free-Entry-REG (0504)

Das FIFO-Free-Entry-REG zeigt auf den freien Eintrag, der dem Beginn (FIFO-Start-REG) des FIFO-Speichers am nächsten ist. An diese Stelle werden die Konfigurationsworte kopiert, welche während des Durchlaufens des FIFO-Speichers wiederum nicht durch die Ladelogik verarbeitet werden konnten.

### 5. Einen Programmzähler (PC)

Der PC zeigt auf die Adresse innerhalb des Konfigurationsspeichers, in dem das nächste, durch die Ladelogik zu verarbeitende Konfigurationswort steht.

### 6. Ein Adress-REG (0510)

In diesem Register wird die Adresse einer zu adressierenden Zelle gespeichert.

### 7. Ein Data-REG (0511)

Dieses Register speichert die Konfigurationsdaten, welche an die Zelle gesendet werden sollten, welche durch das Adress-REG angesprochen wird.

### 8. Ein Dispatch-REG (0512)

Das Dispatch-REG speichert die Adresse des Eintrags in der Sprung-Tabelle, auf welchen die Ladelogik zugreift. Weiterhin ist der Konfigurationsspeicher und sein verschiedenen Sektionen zu sehen. Dies sind:

### 1. Die Sprung-Tabelle (0506)

Für jede Zelle, welche durch die Ladelogik konfigurierbar ist, existiert ein einziger Eintrag. In diesem Eintrag steht die Adresse, welche bei einer Signalisierung durch diese Zelle in den PC geladen wird.

### 2. Eine Start-Konfiguration (0507)

Die Start-Konfiguration ist jene Konfiguration, welche nach dem Starten des Systems in den Baustein geladen wird.

### 3. Weitere Konfigurationen (0508)

Diese Konfigurationen können während der Laufzeit des Systems in den Baustein geladen werden. Die Konfigurationen bestehen aus Konfigurationswörtern und Ladelogik-Befehlen.

### 4. Einen FIFO-Speicher-Bereich (0509)

Der FIFO-Speicher-Bereich enthält alle die Konfigurationsworte, welche durch die Ladelogik in einem ersten Versuch nicht erfolgreich verarbeitet werden konnten.

Figur 6 zeigt zwei Ausschnitte aus einer Konfiguration. In diesen Ausschnitten sind die Befehle und Konfigurationsworte zu sehen, welche durch die Ladelogik verarbeitet werden. Weiterhin sind zwei Ausschnitte aus der Sprung-Tabelle zu sehen (0601 und 0607) und der Zustand dieser Ausschnitte (0602 und 0608) nach der Abarbeitung der beiden Konfigurationsausschnitte.

### Ausführungsbeispiele

Es wird angenommen, dass ein Baustein oder mehrere Bausteine durch eine Ladelogik, wie beschrieben, umkonfiguriert werden sollen. Weiterhin sei angenommen, dass das System bereits die Startkonfiguration geladen hat und die Ladelogik sich im Zustand *'warten auf ein Ereignis'* befindet. Die Ausführung beginnt mit dem Eintreffen eines Ereignisses von Zelle Nummer 41.

Die Ladelogik beginnt zuerst mit der Abarbeitung des FIFO-Speichers (0201). Dabei wird der Beginn des FIFO-Speichers aus dem Register FIFO-Start-REG in den PC übertragen. Die Daten an der Stelle, auf die der PC zeigt, werden gelesen. Nun wird überprüft, ob das Ende des FIFO-Speichers erreicht wurde. Dies ist in diesem Ausführungsbeispiel der Fall, da das System das erste Mal umgeladen wird.

Die Adresse der Zelle, welche das Signal ausgelöst hat, wird durch die Ladelogik in eine Adresse der Sprung-Tabelle umgerechnet. Diese berechnete Adresse wird in das Dispatch-REG geladen (0512). Die Ladelogik liest nun die Adresse aus der Sprung-Tabelle (0506), welche an der Speicheradresse gespeichert ist, die durch das Dispatch-REG adressiert wird (0601). Diese Adresse wird in den PC geladen.

Daraufhin beginnt die Verarbeitung der Konfigurationsworte (0603). Es sei angenommen, dass der Befehl Nummer 3 (1,3 MUL) nicht ausgeführt werden kann, da die Zelle mit der Adresse (1,3) nicht umkonfiguriert werden kann. Die Daten werden nun in den FIFO-Speicher kopiert. Mit Erreichen des DISPATCH-Befehls (0604) wird an die Adresse 41 in der Sprung-Tabelle eine neue Adresse eingetragen (0602). Der END-Befehl versetzt die Ladelogik wieder in den *'Warten auf ein Ereignis'-Zu*stand. Nach einiger Zeit trifft nun wieder ein Signal von der Zelle 41 ein. Jetzt steht an der Adresse 42 der Sprung-Tabelle eine andere Adresse (0602). Die Ladelogik arbeitet wieder zuerst den FIFO Speicher ab. Nun befinden sich Daten in dem FIFO-Speicher. Die Daten aus dem FIFO-Speicher werden gelesen und es wird versucht, die adressierte Zelle mit den Daten zu laden. Da die Zelle jetzt umkonfiguriert werden kann, gelingt dies. Der Eintrag des FIFO-Speichers wird daraufhin mit einer Leer-Kennung beschrieben. Die ursprüngliche Verarbeitung wird fortgeführt und das Lesen von Konfigurationsdaten beginnt nun an einer unterschiedlichen Adresse (0605).
Diese Konfiguration wird abgearbeitet, der DISPATCH-Befehl schreibt dieses Mal eine Adresse in den Eintrag Nummer 12 der Sprung-Tabelle (0606). Danach versetzt der END-Befehl die Ladelogik wieder in den Zustand *'warten auf ein Ereignis'.*

Dieses Wechselspiel wiederholt sich während der gesamten Laufzeit des Systems.

### Begriffsdefinition

### konfigurierbares Element

Ein konfigurierbares Element stellt eine Einheit eines Logik-Bausteines dar, welche durch ein Konfigurationswort für eine spezielle Funktion eingestellt werden kann. Konfigurierbare Elemente sind somit alle Arten von RAM-Zellen, Multiplexer, arithmetisch-logische Einheiten, Register und alle Arten von interner und externer Vernetzungsbeschreibung etc.

### konfigurieren

Einstellen der Funktion und Vernetzung eines konfigurierbaren Elements.

### Konfigurationsspeicher

Der Konfigurationsspeicher enthält ein oder mehrere Konfigurationsworte.

### Konfigurationswort

Ein Konfigurationswort besteht aus einer beliebig langen Bit-Reihe. Diese Bit-Reihe stellt eine gültige Einstellung für das zu konfigurierende Element dar, so dass eine funktionsfähige Einheit entsteht.

### Ladelogik

Einheit zum Konfigurieren und Umkonfigurieren von programmierbaren Bausteinen; ausgestaltet durch einen speziell an seine Aufgabe angepassten Mikrokontroller oder eine Zustandsmaschine.

### Makro

Ein Makro ist eine Menge von Zellen, welche zusammen eine Aufgabe, Funktion etc. implementieren.

### umkonfigurieren

Neues Konfigurieren von einer beliebigen Menge von konfigurierbaren Elementen eines programmierbaren Bausteins, während eine beliebige Restmenge von konfigurierbaren Elementen ihre eigenen Funktionen fortsetzen (vergleiche konfigurieren).

## Patentansprüche

1. Datenverarbeitungschip mit
einer Vielzahl von zur Laufzeit konfigurierbaren Zellen, von welchen zumindest einige arithmetisch-logische Einheiten aufweisen;
einem als Queue-Memory betreibbaren Speicher zum Ablegen von Konfigurationen für die konfigurierbaren Zellen;
einer Einheit zum Empfangen von Konfigurationen und zum Ablegen der Konfigurationen in der Queue und
einer Einheit zum Auswählen von Konfigurationen in der Queue, basierend auf Ereignissen, wobei die ausgewählte Konfiguration an die jeweilige(n) konfigurierbaren(n) Zelle(n) übertragen und nachfolgend ausgeführt wird.

2. Datenverarbeitungschip nach dem vorhergehenden Anspruch, **dadurch gekennzeichnet, dass** zumindest ein Übertragungsweg für Ereignissignale, basierend auf welchen Konfigurationen von der Auswahleinheit ausgewählt werden können, an einer Vielzahl von zur Laufzeit konfigurierbaren Zellen vorgesehen ist.

3. Datenverarbeitungschip nach einem der vorhergehenden Ansprüche, **dadurch gekennzeichnet, dass** die Vielzahl von zur Laufzeit konfigurierbaren Zellen in einem Array, insbesondere einem multidimensionalen Array, angeordnet sind.

4. Datenverarbeitungschip nach einem der vorhergehenden Ansprüche, **dadurch gekennzeichnet, dass** der Speicher zur Aufnahme aktuell nicht ladbarer Konfigurationen ausgebildet und/oder ein solcher Speicher vorgesehen ist.

5. Datenverarbeitungschip nach einem der vorhergehenden Ansprüche, **dadurch gekennzeichnet, dass** von der Vielzahl zur Laufzeit konfigurierbarer Zellen zumindest einige zur Weiterarbeit während der Übertragung von Konfigurationen an andere und/oder während der Einkonfiguration von Konfigurationen in andere zur Laufzeit konfigurierbare Zellen ausgebildet sind, insbesondere einige konfigurierbare Zellen mit arithmetischer Logikeinheit.

6. Datenverarbeitungschip nach einem der vorhergehenden Ansprüche, **dadurch gekennzeichnet, dass** er ein Mittel umfasst, um ausgewählte Konfigurationen an adressierte Zellen und/oder adressierte Zellgruppen zu senden.

7. Datenverarbeitungschip nach einem der vorhergehenden Ansprüche, **dadurch gekennzeichnet, dass** ein Mittel zur Durchführung von Sprüngen in der Queue vorgesehen ist.

8. Verfahren zum Betreiben eines Datenverarbeitungschips mit einer Vielzahl von zur Laufzeit konfigurierbaren Zellen, von welchen zumindest einige arithmetische Logikeinheiten aufweisen, wobei Konfigurationen für die konfigurierbaren Zellen an eine Einheit gesendet und von dieser in einer Queue gespeichert werden und Konfigurationen aus der Queue basierend auf Ereignissen ausgewählt werden und wobei die ausgewählte Konfiguration an respektive konfigurierbare Zellen übertragen und nachfolgend ausgeführt wird.
